(19) Europäisches Patentamt / European Patent Office / Office européen des brevets

(11) **EP 1 611 568 B1**

(12) **EUROPÄISCHE PATENTSCHRIFT**

(45) Veröffentlichungstag und Bekanntmachung des Hinweises auf die Patenterteilung:
**03.10.2012   Patentblatt 2012/40**

(21) Anmeldenummer: 04703177.8

(22) Anmeldetag: **19.01.2004**

(51) Int Cl.:
*G10L 15/18* ^(2006.01)     *G10L 15/28* ^(2006.01)

(86) Internationale Anmeldenummer:
**PCT/EP2004/000351**

(87) Internationale Veröffentlichungsnummer:
**WO 2004/072954 (26.08.2004 Gazette 2004/35)**

(54) **DREISTUFIGE EINZELWORTERKENNUNG**

THREE-STAGE WORD RECOGNITION

RECONNAISSANCE DE MOTS ISOLES EN TROIS ETAPES

(84) Benannte Vertragsstaaten:
**DE FR GB IT SE**

(30) Priorität: **13.02.2003   DE 10306022**

(43) Veröffentlichungstag der Anmeldung:
**04.01.2006   Patentblatt 2006/01**

(73) Patentinhaber: **SIEMENS AKTIENGESELLSCHAFT
80333 München (DE)**

(72) Erfinder:
• **BLOCK, Hans-Ulrich
  81675 München (DE)**
• **SCHACHTL, Stefanie
  82239 Alling (DE)**

(56) Entgegenhaltungen:
EP-A- 1 162 602     DE-A- 10 207 895
US-A- 5 638 425     US-A1- 2003 004 722

**Beschreibung**

Auf so genannter Embedded Hardware, wie beispielsweise einem Mobiltelefon, einem schnurlosen Telefon, einem PDA, einem Pad oder einem Navigationssystem, die sich derzeit durch Einschränkungen beim Hauptspeicher und geringe Rechenleistung auszeichnet, soll die Spracherkennung von Einzelwörtern aus einem großen Vokabular ermöglicht werden. Unter einem großen Vokabular werden in diesem Zusammenhang Vokabularien von mehr als 60.000 Wörtern verstanden. Es soll zum Beispiel ermöglicht werden, Städtenamen durch ein Sprachkommando in ein Navigationssystem einzugeben oder eine Diktiermöglichkeit für SMS anzubieten.

Darüber hinaus soll auf marktüblicher PC-Hardware die Spracherkennung von Einzelwörtern aus einem sehr großen Vokabular ermöglicht werden. Unter einem sehr großen Vokabular werden in diesem Zusammenhang Vokabularien von mehr als 200.000 Wörtern verstanden. Dadurch soll es beispielsweise ermöglicht werden, Einträge in einem öffentlichen Telefonbuch oder Adressregister durch ein Sprachkommando auszusuchen.

Bislang verwendete Verfahren benötigen für Embedded Hardware zu viel Rechenleistung oder zu viel Speicherplatz. Für marktübliche PC-Hardware stehen zumindest Verfahren für ein großes Vokabular zur Verfügung. Hierfür werden Spracherkenner mit so genanntem "tree search" oder mit so genanntem "FST search" eingesetzt.

Ein interessanter technischer Lösungsweg ist in US 6,256,630 B1 beschrieben. Hier wird ein System vorgeschlagen, das mit einem Ähnlichkeitsmaß arbeitet.

US 5,873,056 und EP1 162 602 beschreibten ebenfalls ein Verfahren zur Spracher-kennung.

US 5,638,425 offenbart eine Spracherkennung mit sehr großem Vokabular auf PC-Hardware, bei der ein Worterkenner und ein Phonemerkenner eingesetzt werden und als Suchwort in der Datenbank dasjenige Erkennungsergebnis verwendet wird, das das beste Übereinstimmungsmaß hat.

Davon ausgehend liegt der Erfindung die Aufgabe zugrunde, eine Spracherkennung, insbesondere eine Einzelworterkennung, bei großem oder sehr großem Vokabular mit weniger Speicher und Rechenleistung zu ermöglichen.

Diese Aufgabe wird durch die in den unabhängigen Ansprüchen angegebenen Erfindungen gelöst. Vorteilhafte Ausgestaltungen ergeben sich aus den Unteransprüchen.

In einem Verfahren zur Spracherkennung wird einer Spracheinheit, insbesondere einem Wort, durch einen Phonemerkenner, also Mittel zum Erkennen von Phonemen, eine Phoneme enthaltende Folge zugeordnet. Dies geschieht, indem der Phonemerkenner in der Spracheinheit vorhandene Phoneme erkennt. Dann wird die so generierte, Phoneme enthaltende Folge mit Vokabulareinträgen eines Auswahlvokabulars verglichen, das groß oder sehr groß ist und entsprechend sehr viele Vokabulareinträge aufweist. Aus den sehr vielen Vokabulareinträgen wird eine Anzahl von Vokabulareinträgen ausgewählt, die der Phoneme enthaltenden Folge ähnlich sind. Vorzugsweise sind dies die der Phoneme enthaltenden Folge ähnlichsten Vokabulareinträge und ihre Anzahl liegt erheblich unter der Anzahl der Vokabulareinträge des Auswahlvokabulars. Die so ausgewählten, der Phoneme enthaltenden Folge ähnlichen Vokabulareinträge werden dann als Erkennungsvokabular eines Spracheinheiterkenners, also Mitteln zum Erkennen von Spracheinheiten, geladen und die Spracheinheit wird vom Spracheinheiterkenner aus diesem Erkennungsvokabular erkannt. Zur Auswahl der der Phoneme enthaltenden Folge ähnlichen Vokabulareinträge wird die Phoneme enthaltende Folge des zu erkennenden Wortes in Phonemeinheiten aufgeteilt. Für alle Vokabulareinträge des Gesamtvokabulars wird dann die Häufigkeit des Auftretens der einzelnen Phonemeinheiten in den jeweiligen Vokabulareinträgen ermittelt. Eine Vereinigungsmenge aller Vokabulareinträge wird gebildet, die zumindest eine Phonemeinheit mit dem zu erkennenden Wort gemein haben, zusammen mit einer entsprechenden Häufigkeitsangabe, wie oft die Phonemeinheiten des zu erkennenden Wortes in dem jeweiligen Vokabulareintrag vorkommen. Die Häufigkeitsangabe wird über eine Länge der Spracheinheit und über eine Länge des jeweiligen Vokabulareintrags normiert. Aufgrund der normierten Häufigkeitsangabe wird eine Auswahl aus der Vereinigungsmenge für das Teilvokabular getroffen, auf dessen Grundlage schließlich das zu erkennende Wort erkannt wird.

Daraus ergibt sich der Vorteil, dass sowohl bei der Erkennung durch den Phonemerkenner als auch bei der Erkennung durch den Spracheinheiterkenner die Suche in einem relativ kleinen Vokabular ausgeführt werden kann, was eine erhebliche Einsparung an Speicher- und Rechenressourcen bedeutet. Auf dem Auswahlvokabular wird dagegen nur eine Ähnlichkeitssuche ausgeführt, die wesentlich weniger rechenintensiv ist.

Übliche Phonemerkenner liefern leider häufig eine relativ schlechte Erkennungsleistung. Deshalb ist es sinnvoll, die Erkennungsleistung des in der ersten Stufe verwendeten Phonemerkenners durch bestimmte Maßnahmen zu verbessern.

Dazu können als Erkennungsvokabular des Phonemerkenners nicht nur die in der deutschen Sprache beispielsweise 36 Phoneme verwendet werden, sondern auch noch andere Einheiten, die als Pseudophoneme in das Vokabular des Phonemekenners eingefügt werden. Da größere Einheiten in der Regel besser erkannt werden, können als Pseudophoneme größere Einheiten, die für sich noch keine Wörter bilden, verwendet werden, insbesondere Konsonantencluster, Kombinationen aus einem Vokal und einem Konsonanten und/oder die am häufigsten vorkommenden Silben der Sprache der zu erkennenden Spracheinheit. Der Phonemerkenner ist also ein Erkenner, der insbesondere, aber nicht nur Phoneme erkennt.

Die Anzahl der Vokabulareinträge des Phonemerkenners sollte allerdings nicht so groß werden, dass die Ressourcen des embedded oder PC-Spracherkenners zu stark belastet werden, wodurch die Vorteile der Erfindung verloren gingen. In der Praxis hat es sich als vorteilhaft herausgestellt, wenn die Anzahl der Vokabulareinträge des Phonemerkenners etwa 0,01% bis 10% der Vokabulareinträge des Auswahlvokabulars beträgt, insbesondere etwa 0,1% bis 1%. Je nach embedded Lösung sollte die Anzahl der Vokabulareinträge des Phonemerkenners also etwa 300 oder auch etwa 2000 betragen.

Bei einer relativ großen Anzahl der Vokabulareinträge des Phonemerkenners, also so etwa 2000, können als Pseudophoneme neben Kombinationen aus einem Vokal und einem Konsonanten auch Kombinationen aus mehreren Vokalen und Konsonanten berücksichtigt werden.

Eine andere Möglichkeit, die Leistung des Phonemerkenners zu verbessern, besteht darin, nur bestimmte Abfolgen der Phoneme oder der Phoneme und größeren Einheiten in der Folge von Phonemen zuzulassen. Das sind insbesondere die Abfolgen, die phonotaktisch korrekt sind. Dies lässt sich durch die Verwendung eines Sprachmodells und/oder durch eine die phonetischen Spracheinheitbildungsregeln der jeweiligen Sprache beschreibende Spracheinheitgrammatik bei der Erkennung erzielen.

Auch bei der zweiten Stufe, der Auswahl der der Phoneme enthaltenden Folge ähnlichen Vokabulareinträge aus dem Auswahlvokabular lassen sich durch bestimmte Maßnahmen erhebliche Effizienzsteigerungen erzielen.

Da als Spracheinheiten in der Regel Einzelworte erkannt werden sollen, führt eine falsch erkannte größere Einheit, insbesondere eine falsch erkannte Silbe, zu einem relativ großen Fehler beim Bestimmen der Ähnlichkeit und damit bei der Auswahl, da sie allein schon einen großen Anteil des Wortes ausmacht. Oftmals enthält diese falsch erkannte größere Einheit aber zumindest eines oder mehrere richtig erkannte Phoneme. Dies lässt sich ausnutzen, indem die größeren Einheiten vor der Auswahl von der Phoneme enthaltenden Folge ähnlichen Vokabulareinträgen wieder in Phoneme zerlegt werden, so dass die Phoneme enthaltende Folge als Phonemfolge ausschließlich oder nahezu ausschließlich Phoneme enthält. Dadurch liefern die in der falsch erkannten größeren Einheit enthaltenen richtigen Phoneme einen korrekten Beitrag bei der Bestimmung der Ähnlichkeit.

Bei der Auswahl der der Phoneme enthaltenden Folge ähnlichen Vokabulareinträgen kann grundsätzlich ein beliebiges Ähnlichkeitsmaß verwendet werden, um die Ähnlichkeit zwischen der Phoneme enthaltenden Folge und dem jeweils zu vergleichenden Vokabulareintrag zu bestimmen. Die Vokabulareinträge des Auswahlvokabulars werden dann entsprechend der Größe ihres Ähnlichkeitsmaßes geordnet und die der Phoneme enthaltenden Folge ähnlichsten Vokabulareinträge werden ausgewählt.

Allerdings würde bei einem großen oder sehr großen Auswahlvokabular eine Bestimmung der Ähnlichkeitsmaße sämtlicher Vokabulareinträge einen unvertretbaren Zeitaufwand bedeuten. Deshalb ist es vorteilhaft, wenn die Auswahl der der Phoneme enthaltenden Folge ähnlichen Vokabulareinträgen mit Hilfe eines Fuzzy-Matches und/oder mit Hilfe einer Index-Suche erfolgt. Dazu kann die Phoneme enthaltende Folge in die Menge ihrer Phonembigramme zerlegt werden.

Für die Größe des Erkennungsvokabulars des Spracheinheiterkenners ergeben sich in etwa die gleichen Anforderungen wie für die Größe des Erkennungsvokabulars des Phonemerkenners. Entsprechend sind das Vokabular des Spracheinheiterkenners und das Vokabular des Phonemerkenners vorzugsweise in etwa gleich umfangreich. Da die ausgewählten, der Phoneme enthalten Folge ähnlichen Vokabulareinträge als Erkennungsvokabular des Spracheinheiterkenners dienen oder zumindest den wesentlichen Teil davon bilden, heißt das, dass die Anzahl der ausgewählten, der Phoneme enthaltenden Folge ähnlichen Vokabulareinträgen etwa 0,01% bis 10% der Vokabulareinträge des Auswahlvokabulars beträgt, insbesondere etwa 0,1% bis 1%. Daraus ergibt sich bei heutigen Lösungen eine Anzahl von etwa 300 oder auch eine Anzahl von etwa 2000.

Für sprecherunabhängige Spracherkennung kann als Spracheinheiterkenner vorzugsweise ein HMM-Erkenner eingesetzt werden. Alternativ oder ergänzend ist aber auch der Einsatz eines DTW-Erkenners möglich. Der Spracheinheiterkenner arbeitet insbesondere mit einer Viterbisuche.

In den meisten Einsatzfällen wird die Spracheinheit ein Wort sein, insbesondere ein Name etwa in Form eines Städtenamens, Straßennamens und/oder Personennamens. Der Spracheinheiterkenner ist dann dementsprechend in der Regel ein Worterkenner.

Eine Vorrichtung, die eingerichtet ist und Mittel aufweist, um das vorstehende Verfahren auszuführen, lässt sich beispielsweise durch entsprechendes Einrichten und Programmieren einer Datenverarbeitungsanlage realisieren. Dadurch können insbesondere der Phonemerkenner, die Auswahlmittel und der Spracheinheiterkenner zur Verfügung gestellt werden. Da die Spracheinheit sowohl für den Erkennungsvorgang des Phonemerkenners als auch für den Erkennungsvorgang des Spracheinheiterkenners benötigt wird, enthält die Vorrichtung vorzugsweise Mittel, durch die die Spracheinheit sowohl dem Phonemerkenner als auch später dem Spracheinheiterkenner zuführbar ist. Diese Mittel können beispielsweise einen Sprachsignalspeicher aufweisen.

Andere vorteilhafte Ausgestaltungen der Vorrichtung ergeben sich analog zu den vorteilhaften Ausgestaltungen des Verfahrens.

Ein Programmprodukt für eine Datenverarbeitungsanlage, das Codeabschnitte enthält, mit denen eines der

EP 1 611 568 B1

geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Codeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Vorteile und Merkmale der Erfindung ergeben sich aus der Beschreibung eines Ausführungsbeispiels anhand der Zeichnung. Dabei zeigt

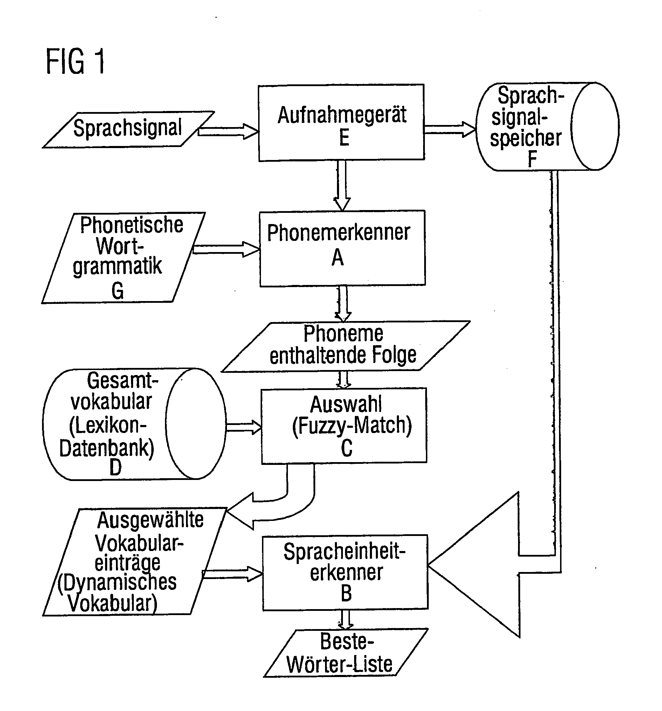

Figur 1    ein Ablaufdiagramm eines Verfahrens zur Spracherkennung;
Figur 2    eine Wortgrammatik.

Eine Vorrichtung zur Spracherkennung in Form eines Spracherkennungssystems für große Wortschätze enthält beispielsweise folgende Komponenten:

- Ein erstes Spracherkennungssystem in Form eines Phonemerkenners A, das auf der Zielplattform Einheiten aus einem festgelegten Vokabular von mindestens 300 Wörtern kontinuierlich gesprochen erkennen kann, was eine sehr geringe Anforderung ist, und die Angabe eines Sprachmodells in Form eines endlichen Automaten erlaubt;
- ein zweites Spracherkennungssystem in Form eines Spracheinheiterkenners B, das auf der Zielplattform Einzelwörter aus einem dynamisch ladbaren Vokabular von mindestens 300 Wörtern erkennen kann, was ebenfalls eine sehr geringe Anforderung ist;
- Mittel zur Auswahl von der Phoneme enthaltenden Folge ähnlichen Vokabulareinträgen aus einem Auswahlvokabular in Form eines Fuzzy-Match-Index-Systems C, wie es etwa aus der Technologie der Translation Memories bekannt ist und dessen Einsatz beispielsweise in US 5,724,593 beschrieben ist;
- eine Datenbank D, in der das zu erkennende Vokabular als Auswahlvokabular in seiner graphemischen und phonetischen Form abgelegt ist;
- ein Aufnahmegerät E, mit dem das vom Benutzer geäußerte Sprachsignal aufgenommen wird;
- einen Sprachsignalspeicher F, in dem das mit dem Aufnahmegerät E aufgenommene Sprachsignal gespeichert wird;
- optional eine Spracheinheitgrammatik in Form einer Grammatik G, die die phonetischen Regeln der Sprache beschreibt.

In der ersten Stufe eines Verfahrens zur Spracherkennung wird eine Phonemerkennung durchgeführt. Dazu wird eine Äußerung eines Benutzers mit dem Aufnahmegerät E aufgenommen und in dem Sprachsignalspeicher F gespeichert. Mittels des ersten Spracherkennungssystems in Form eines Phonemerkenners A wird dem Sprachsignal eine Phoneme enthaltende Folge zugeordnet.

Dabei ist die Auswahl des Erkennungsvokabulars des Phonemerkenners besonders wichtig. Bisherige Verfahren für die Phonemerkennung definieren als Einheiten des Phonemerkenners die Phoneme der Sprache, also beispielsweise für das Deutsche a, a:, ä, ä:, e, ..., die ohne Sprachmodell erkannt werden. Systeme, die so aufgebaut sind, sind sehr störanfällig und liefern im Allgemeinen sehr schlechte Erkennungsergebnisse, die nur sehr bedingt zu gebrauchen sind. Insbesondere variieren die erkannten Phonemfolgen bei Eingabe desselben Worts stark von Sprecher zu Sprecher.

Die Erkennung größerer Zusammenhänge wie beispielsweise Wörter funktioniert besser, da sich die Lautqualität von Konsonanten auch noch auf den Nachbarlauten widerspiegelt.

Deshalb wird der Phonemerkenner vorzugsweise derart gestaltet, dass möglichst größere Einheiten als Phoneme erkannt werden, aber dennoch das Vokabular so klein gehalten wird, dass der Phonemerkenner auf Embedded Hardware auflauffähig ist. Die Größe des Erkennungsvokabulars eines Spracherkennungssystems determiniert nämlich Speicher- und CPU-Bedarf.

Als Einheiten des Erkennungsvokabulars des Phonemerkenners werden daher gewählt: die Phoneme (Laute) der Sprache (wie in herkömmlichen Phonemerkennern, im Deutschen 36) + alle im Vokabular vorkommenden Konsonantencluster (im Deutschen beispielsweise lchst, mpft etc., in Summe ca. 180) + die 120 häufigsten Silben. Das gibt insgesamt ca. 300 Vokabulareinträge, was der üblichen Leistungsfähigkeit von Embedded Hardware entspricht. Bei leistungsfähigerer Hardware können auch etwa 2000 Vokabulareinträge verwendet werden, wobei hier Kombinationen aus einem oder mehreren Vokalen mit einem oder mehreren Konsonanten und weitere häufige Silben hinzutreten.

Die Abfolge dieser Einheiten des Erkennervokabulars (Vokabularelemente) in einem Wort wird entweder durch ein statisches, am Vokabular trainiertes, bi- oder trigramm-Sprachmodell oder durch eine die phonetische Wortbildungsregeln der jeweiligen Sprache beschreibende Grammatik G eingeschränkt.

Eine solche Grammatik G, die in Form und Mächtigkeit eines endlichen Automaten spezifiziert werden kann, beschreibt beispielsweise ein Wort als eine Folge von einer oder mehreren Silben und diese Silben dann wiederum jeweils als Folge von optionalem Anlaut, Vokal und optionalem Auslaut. Sie legt fest, aus welchen Konsonanten und Konsonantenclustern die Anlaute und Auslaute der betrachteten Sprache bestehen können und welche Gruppen von Auslauten auf welche Vokale folgen können.

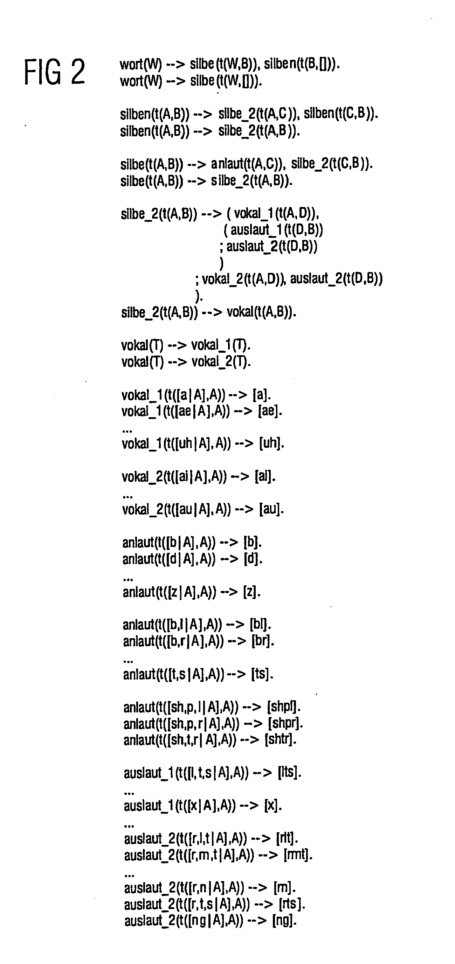

Weiterhin beschreibt die Grammatik gegebenenfalls auch konsonantische Silben wie dl in einem Eigenname Brandl. Eine typische Grammatik ist in Figur 2 dargestellt.

Das erste Spracherkennungssystem in Form des Phonemerkenners A gibt nun eine Folge von solchen Einheiten des Vokabulars als Ergebnis zurück. Für das Wort Mönchengladbach ist das beispielsweise die Folge m-ö-nch-en-gl-a-t-b-a-x oder auch - bei schlechterer Erkennung - b-öh-mch-nen-k-au-b-a-k.

Es hat sich als ganz besonders vorteilhaft erwiesen, wenn für die später folgende Auswahl des Erkennervokabulars des zweiten Spracherkennungssystems in Form des Spracheinheiterkenners B diese erkannten Folgen von Phonemen und größeren Einheiten nun wieder in Phonemfolgen zerlegt werden. Für das oben genannte Beispiel ergeben sich die Phonemfolgen m-ö-n-ch-e-n-g-1-a-t-b-a-x bzw. b-öh-m-ch-n-e-n-k-au-b-a-k, mit denen weitergearbeitet wird.

In der zweiten Stufe des Verfahrens zur Spracherkennung erfolgt die Auswahl der der Phoneme enthaltenden Folge ähnlichen Vokulareinträge aus einem Auswahlvokabular mit Hilfe eines Fuzzy-Matches. Mit dem Fuzz-Match-Index-System C werden dazu in der Datenbank D diejenigen 300 Einträge gesucht, die der erkannten Phonemfolge im Sinne eines Fuzzy-Matches am ähnlichsten sind.

Um diese Fuzzy-Suche zu ermöglichen, wird nach folgendem Verfahren ein Index aufgebaut. Die n Einträge der Datenbank werden jeweils mit einer eindeutigen Indexnummer aus {1...n} versehen. Zur phonetischen Repräsentation inklusive Anfangs - und Endmarkierer (#) eines jeden Eintrags i wird die Menge der in ihr enthaltenen Bigramme gebildet. Für Mönchengladbach und die Phonemfolge m-ö-n-ch-e-n-g-l-a-t-b-a-x werden dementsprechend die Phonembigramme {#-m,m-ö,ö-n,n-ch,ch-e,e-n,n-g,g-l,l-a,a-t,t-b,b-a,a-x,x-#} gebildet.

Für jedes Bigramm b aus dieser Menge wird ein Indexeintrag b-{i} gespeichert. Kommt Bigramm b noch in einem weiteren Eintrag j vor, wird der Indexeintrag entsprechend zu b {i,j} erweitert. Dies wird für alle Einträge und alle Bigramme fortgeführt.

Das Ergebnis ist eine spärlich besiedelte Matrix von Bigrammen (types) auf die jeweiligen Indexnummern der Einträge, in denen das Bigramm vorkommt.

Der Fuzzy-Match wird nun derart realisiert, dass die erkannte Phonemfolge, beispielsweise b-öh-m-ch-n-e-n-k-au-b-a-k in die Menge ihrer Bigramme BM zerlegt wird {#-b,b-öh,öh-m,m-ch,ch-n,n-e,e-n,n-k,k-au,au-b,b-a,a-k,k-#}.

Zu jedem Bigramm wird der zugeordnete Vektor der Indexnummern aus dem Speicher ausgelesen und es wird eine unscharfe Vereinigungsmenge VM derjenigen Indexnummern gebildet, auf die durch Bigramme in BM verwiesen wird. Jedes Element e der Vereinigungsmenge VM ist dabei mit einer Häufigkeitsangabe versehen, die angibt, wie viele Bigramme aus BM auf e verweisen.

Die Häufigkeitsangabe im gegebenen Beispiel für den Eintrag i (Mönchengladbach) ist beispielsweise 2, da nur e-n und b-a auf i verweisen.

Die errechnete Häufigkeit h der Indexnummer wird abschließend in ein über die Länge des Musters lm und die Länge der phonetischen Form des Eintrags le normiertes Gewichtsmaß g umgewandelt. Dies geschieht nach der Formel g = -log(h/lm)*0,5 + -log(h/le)*0,5 oder nach einer anderen geeigneten Formel.

Die Elemente der unscharfen Vereinigungsmenge VM werden nun nach ihrem Gewicht aufsteigend sortiert.

Für die dritte Stufe, die Spracheinheiterkennung durch den Spracheinheiterkenner, werden beispielsweise die den ersten 300 Elementen der sortierten Menge VM zugeordneten Einträge als Vokabular in das zweite Spracherkennungssystem in Form des Spracheinheiterkenners B geladen. Mit dem Spracheinheiterkenner, der insbesondere als Worterkenner realisiert ist, wird nun noch einmal das im Sprachspeicher F gespeicherte Sprachsignal analysiert. Typischerweise sollte das Spracherkennungssystem die m am besten erkannten Wörter ausgeben.

Die genannte Vokabulargröße von 300 für das erste Spracherkennungssystem in Form des Phonemerkenners A ist eine arbiträre Größe. Generell gilt, dass das Erkennungsergebnis um so besser ist, je mehr größere Einheiten im Lexikon enthalten sind. Wenn die Rechenleistung der Hardware es gestattet, kann es beispielsweise vorteilhaft sein, statt der genannten 300 Einträge ein Vokabular zu verwenden, das aus den Silben einer Sprache oder allen in der Datenbank vorkommenden Silben besteht. Im Deutschen ist hier mit etwa 7000 Einträgen zu rechnen. Die Formulierung der phonetischen Wortgrammatik kann sich dann auf die triviale Regel Wort = Silbe* (ein Wort besteht aus einer Folge von einer oder mehreren Silben) beschränken.

Das Fuzzy-Match-System kann gegebenenfalls verbessert werden, wenn bekanntermaßen leicht verwechselbare Laute wie m und n sowohl in der Datenbank als auch in der erkannten Phonemfolge auf einen Laut, beispielsweise n, normiert werden. Im obigen Beispiel hätte der Eintrag für Möchengladbach bei einer m-n-Normierung zwei Punkte mehr erhalten. Erste empirische Tests haben allerdings bisher gezeigt, dass der Einsatz solcher Normierungen auch stark zur Auswahl falscher Einträge beiträgt.

Weiterhin kann das Fuzzy-Match-System gegebenenfalls dadurch verbessert werden, dass die Häufigkeitsberechnung so gestaltet wird, dass Bigramme, die bekanntermaßen schlecht erkennbare Laute, wie beispielsweise die stimmlosen Plosive p, t, k enthalten, nur zu einem geringeren Teil als 1,0 zur Häufigkeit der entsprechenden Indexnummern beitragen.

Das Fuzzy-Match-System kann dadurch verbessert werden, dass in das normierte Gewichtsmaß neben der Häufigkeit der Bigramme auch die absolute Differenz der Anzahl der Vokale in Datenbankeintrag ve und Suchmuster vs sowie die absolute Differenz der Länge von Datenbankeintrag le und Suchmuster lm eingehen. Dies kann beispielsweise durch Berechnung eines Gewichtsmaßes g nach folgender Formel geschehen:

$$g= -\log(h/lm)*f_1 + -\log(h/le)*f_2 + -\log(1/(abs(vm-ve)+1))*f_3$$
$$+ -\log(1/(abs(lm-le)+1))*f_4$$

wobei die Koeffizienten $f_n$ sinnvoll einzusetzen sind.

Auch die genannte Vokabulargröße von 300 für das zweite Spracherkennungssystem in Form des Spracheinheiterkenners B ist eine arbiträre Größe. Wenn die Rechenleistung der Hardware es gestattet, ist es sicherlich vorteilhaft, statt der genannten 300 Einträge ein größeres dynamisches Vokabular der Größe v zu verwenden. Beim Fuzzy-Match werden dann entsprechend die ersten v Elemente aus der sortierten Menge VM zur weiteren Betrachtung gewählt.

Durch die Erfindung wird eine Einzelworterkennung aus großen Wortschätzen bei geringen Hardwareanforderungen durch Aufteilung in drei einfachere Operationen realisiert.

Die Spracherkennung aus Vokabularen von bis zu 300 Wörtern auf einem PDA oder einer Autoelektronik (Navigationssystem) ist bereits heute Stand der Technik und machbar.

Der Speicherplatz- und CPU-Bedarf für den Fuzzy-Match ist nachweisbar gering. Zum Beleg dienen die folgenden Beispiele.

Speicherbedarf: ein Vokabular aus 65.000 Wörtern enthält bei einer grob geschätzten durchschnittlichen Wortlänge von 10 Phonemen/Wort 650.000 Phonemvorkommen (Tokens), denn die durchschnittliche Wortlänge im Deutschen ist ca. 8, plus Wortanfang- und -endemarkierung ergibt 10. Der Wert ist auch an 65.000 Städtenamen nachgewiesen. Da die Anzahl der Bigramm-Vorkommen trivialerweise gleich der Anzahl der Phonemvorkommen ist, ergibt sich eine Menge von ca. 650.000 Bigramm-Vorkommen. Die Anzahl der unterschiedlichen Bigramm-Typen ist natürlich geringer. An empirischen Daten gemessen ergibt sich eine Menge von ca. 1.200 Bigramm-Typen. Trivialerweise ist die Anzahl der Einträge in der spärlich besiedelten Indexmatrix gleich der Anzahl der Bigramm-Vorkommen, also ca. 650.000. Da für die Kodierung von 65.000 (>64k) Indexnummern 3 Byte pro Indexnummer benötigt werden, beträgt der Speicherbedarf für die spärlich besiedelte Indexmatrix 1.950.000 Byte bzw. ca. 2 MB. Hinzu kommt der Speicherbedarf für die graphemische Repräsentation der Einträge (ca. 700 KB) plus jeweils ein Byte für die Speicherung der Länge der Phonemkette und die Anzahl der Vokale (zusammen 130.000 Byte) sowie ein Arbeitsspeicher für die Bildung der unscharfen Vereinigungsmenge von maximal 65.000 Elementen. Der Speicherbedarf für jedes Element liegt bei 7 Byte: 3 Byte für die Indexnummer und 4 Byte für die Realzahl-Darstellung des Gewichts. Für den Arbeitsspeicher sind somit 455.000 Byte zu reservieren. Der Speicherbedarf für den Fuzzy-Match beträgt also für ein Vokabular von 65.000 Einträgen insgesamt maximal 3,2 MB.

CPU-Bedarf: Der CPU-Bedarf hängt von der Bildung der unscharfen Vereinigungsmenge ab. Bei 650.000 Bigramm-Vorkommen und 1200 unterschiedlichen Bigramm-Typen, ergeben sich im Durchschnitt ca. 540 Indexnummern pro Bigramm. Die Anzahl der notwendigen Additionen zur Berechnung der Häufigkeiten beträgt also im Schnitt n*540 bei einer erkannten Phonemkette der Länge n. Hinzu kommt die Berechnung des Gewichts und die entsprechende Sortierung des Arbeitsspeichers.

**Patentansprüche**

**1.** Verfahren zur Spracherkennung,

- bei dem einer Spracheinheit durch einen Phonemerkenner eine Phoneme enthaltende Folge zugeordnet wird,
- bei dem aus einem Auswahlvokabular der Phoneme enthaltenden Folge ähnliche Vokabulareinträge ausgewählt werden,
- bei dem die Spracheinheit durch einen Spracheinheiterkenner erkannt wird,
- bei dem das Erkennungsvokabular des Spracheinheiterkenners die ausgewählten, der Phoneme enthaltenden Folge ähnlichen Vokabulareinträge enthält, wobei zur Auswahl der der Phoneme enthaltenden Folge ähnlichen Vokabulareinträge
- die Phoneme enthaltende Folge in Phonemeinheiten aufgeteilt wird,
- für alle Vokabulareinträge die Häufigkeit des Auftretens der einzelnen Phonemeinheiten in den jeweiligen Vokabulareinträgen ermittelt wird,

- eine Vereinigungsmenge aller Vokabulareinträge, die zumindest eine Phonemeinheit mit der Spracheinheit gemein haben, zusammen mit einer entsprechenden Häufigkeitsangabe, wie oft die Phonemeinheiten der Spracheinheit in dem jeweiligen Vokabulareintrag vorkommen, gebildet wird,

- die Häufigkeitsangabe über eine Länge der Spracheinheit und über eine Länge des jeweiligen Vokabulareintrags normiert wird,

- aufgrund der normierten Häufigkeitsangabe eine Auswahl aus der Vereinigungsmenge für das Erkennungsvokabular getroffen wird.

2. Verfahren nach Anspruch 1,
bei dem als Erkennungsvokabular des Phonemerkenners neben Phonemen auch größere Einheiten als Phoneme verwendet und der Spracheinheit zugeordnet werden, insbesondere Konsonantencluster, Kombinationen aus einem Vokal und einem Konsonanten und/oder die am häufigsten vorkommenden Silben.

3. Verfahren nach Anspruch 1 oder Anspruch 2,
bei dem die Anzahl der Vokabulareinträge des Phonemerkenners weniger als 10% der Vokabulareinträge des Auswahlvokabulars beträgt, insbesondere weniger als 1%.

4. Verfahren nach einem der vorhergehenden Ansprüche,
bei dem die Abfolge in der Folge von Phonemen durch ein Sprachmodell und/oder durch eine die phonetischen Spracheinheitsbildungsregeln beschreibende Spracheinheitsgrammatik eingeschränkt wird.

5. Verfahren nach Anspruch 2,
bei dem die größeren Einheiten vor der Auswahl der der Phoneme enthaltenden Folge ähnlichen Vokabulareinträge in Phoneme zerlegt werden.

6. Verfahren nach einem der vorhergehenden Ansprüche,
bei dem die Auswahl der der Phoneme enthaltenden Folge ähnlichen Vokabulareinträge mit Hilfe einer Indexsuche erfolgt.

7. Verfahren nach einem der vorhergehenden Ansprüche,
bei dem zur Auswahl der der Phoneme enthaltenden Folge ähnlichen Vokabulareinträge der Phoneme enthaltenden Folge entsprechende Phonembigramme gebildet werden.

8. Verfahren nach einem der vorhergehenden Ansprüche,
bei dem die Anzahl der ausgewählten, der Phoneme enthaltenden Folge ähnlichen Vokabulareinträge weniger als 10% der Vokabulareinträge des Auswahlvokabulars beträgt, insbesondere weniger als 1%.

9. Verfahren nach einem der vorhergehenden Ansprüche,
bei dem der Spracheinheiterkenner einen HMM-Erkenner aufweist.

10. Verfahren nach einem der vorhergehenden Ansprüche,
bei dem die Spracheinheit ein Wort ist.

11. Vorrichtung zur Spracherkennung, die eingerichtet ist und Mittel aufweist, um ein Verfahren nach einem der Ansprüche 1 bis 10 auszuführen.

12. Programmprodukt, das, wenn es auf eine Datenverarbeitungsanlage geladen und darauf ausgeführt wird, ein Verfahren nach den Ansprüchen 1 bis 10 durch führt.

**Claims**

1. Method for speech recognition,

- whereby a phoneme-containing sequence is assigned to a speech unit by a phoneme recogniser,
- whereby vocabulary entries similar to the phoneme-containing sequence are selected from a selection vocabulary,
- whereby the speech unit is recognised by a speech unit recogniser,

- whereby the recognition vocabulary of the speech unit recogniser contains the selected vocabulary entries which are similar to the phoneme-containing sequence whereby, for the purpose of selecting the vocabulary entries which are similar to the phoneme-containing sequence

- the phoneme-containing sequence is split up into phoneme units,

- for all the vocabulary entries, the frequency of occurrence of the individual phoneme units in the vocabulary entries concerned is determined,

- a set is formed which is the union of all the vocabulary entries which have at least one phoneme unit in common with the speech unit, together with a corresponding frequency measure of how often the phoneme units of the speech unit occur in the vocabulary entry concerned,

- the frequency measure is normalised against the length of the speech unit and against the length of the vocabulary entry concerned,

- on the basis of this normalised frequency measure, the recognition vocabulary is selected from the union set.

2. Method in accordance with claim 1,
whereby, for the recognition vocabulary of the phoneme recogniser, not only phonemes but also larger units are used and are assigned to the speech unit as phonemes, in particular consonant clusters, combinations of a vowel and a consonant and/or the most commonly occurring syllables.

3. Method in accordance with claim 1 or claim 2,
whereby the number of vocabulary entries for the phoneme recogniser amounts to less than 10% of the vocabulary entries of the selection vocabulary, in particular less than 1%.

4. Method in accordance with one of the preceding claims,
whereby the order of their occurrence in the sequence of phonemes is restricted by a speech model and/or a speech unit grammar which specifies the phonetic rules of speech unit formation.

5. Method in accordance with claim 2,
whereby the larger units are split up into phonemes before the selection is made of the vocabulary entries which are similar to the phoneme-containing sequence.

6. Method in accordance with one of the preceding claims,
whereby the selection of the vocabulary entries similar to the phoneme-containing sequence is made with the help of an index search.

7. Method in accordance with one of the preceding claims,
whereby, for the purpose of selecting the vocabulary entries which are similar to the phoneme-containing sequence, phoneme bigrams are formed corresponding to the phoneme-containing sequence.

8. Method in accordance with one of the preceding claims, whereby the number of selected vocabulary entries which are similar to the phoneme-containing sequence amounts to less than 10% of the vocabulary entries in the selection vocabulary, in particular less than 1%.

9. Method in accordance with one of the preceding claims, whereby the speech unit recogniser has an HMM recogniser.

10. Method in accordance with one of the preceding claims, whereby the speech unit is a word.

11. Device for speech recognition which is equipped and has facilities for carrying out a method in accordance with claims 1 to 10.

12. Program product which, when it is loaded onto a data processing system and is executed on it, implements a method in accordance with claims 1 to 10.

**Revendications**

1. Procédé de reconnaissance vocale,

- dans lequel une séquence contenant des phonèmes est associée par un système de reconnaissance de phonèmes à une unité vocale,
- dans lequel sont sélectionnées, parmi un vocabulaire choisi de la séquence contenant des phonèmes, des entrées de vocabulaire similaires,
- dans lequel l'unité vocale est reconnue par un système de reconnaissance d'unités vocales,
- dans lequel le vocabulaire de reconnaissance du système de reconnaissance d'unités vocales comporte les entrées de vocabulaire sélectionnées similaires à la séquence contenant des phonèmes, et pour sélectionner les entrées de vocabulaire similaires à la séquence contenant des phonèmes
- on divise la séquence contenant des phonèmes en unités de phonème,
- on détermine pour toutes les entrées de vocabulaire la fréquence de l'apparition des différentes unités de phonème dans les entrées de vocabulaire respectives,
- on forme un ensemble réunissant toutes les entrées de vocabulaire ayant au moins une unité de phonème en commun avec l'unité vocale, conjointement avec une indication correspondante de la fréquence de survenue des unités de phonème de l'unité vocale dans l'entrée de vocabulaire respective,
- on normalise l'indication de la fréquence sur une longueur de l'unité vocale et sur une longueur de l'entrée de vocabulaire respective,
- on fait une sélection parmi ledit ensemble sur la base de l'indication de la fréquence normalisée, pour le vocabulaire de reconnaissance.

2. Procédé selon la revendication 1,
dans lequel on utilise comme vocabulaire de reconnaissance du système de reconnaissance de phonèmes et on associe à l'unité vocale, outre les phonèmes, aussi de plus grandes unités comme phonèmes, en particulier des clusters de consonnes, des combinaisons d'une voyelle et d'une consonne et/ou les syllabes les plus fréquentes.

3. Procédé selon la revendication 1 ou la revendication 2,
dans lequel le nombre des entrées de vocabulaire du système de reconnaissance de phonèmes s'élève à moins de 10% des entrées de vocabulaire du vocabulaire choisi, en particulier à moins de 1%.

4. Procédé selon l'une des revendications précédentes,
dans lequel le déroulement dans la séquence de phonèmes est restreint par un modèle vocal et/ou par une grammaire d'unité vocale qui décrit les règles de construction de l'unité vocale phonétique.

5. Procédé selon la revendication 2,
dans lequel on divise les plus grandes unités en phonèmes avant de sélectionner les entrées de vocabulaire similaires à la séquence contenant des phonèmes.

6. Procédé selon l'une des revendications précédentes,
dans lequel la sélection des entrées de vocabulaire similaires à la séquence contenant des phonèmes s'effectue à l'aide d'une recherche par index.

7. Procédé selon l'une des revendications précédentes,
dans lequel on construit pour la sélection des entrées de vocabulaire similaires à la séquence contenant des phonèmes des bigrammes de phonèmes correspondant à la séquence contenant des phonèmes.

8. Procédé selon l'une des revendications précédentes,
dans lequel le nombre des entrées de vocabulaire sélectionnées similaires à la séquence contenant des phonèmes s'élève à moins de 10% des entrées de vocabulaire du vocabulaire choisi, en particulier à moins de 1%.

9. Procédé selon l'une des revendications précédentes,
dans lequel le système de reconnaissance d'unités vocales est un système de reconnaissance HMM.

10. Procédé selon l'une des revendications précédentes,
dans lequel l'unité vocale est un mot.

11. Dispositif de reconnaissance vocale, configuré et doté de moyens pour mettre en oeuvre un procédé selon l'une des revendications 1 à 10.

12. Produit logiciel qui, lorsqu'il est chargé et lancé sur un ordinateur, met en oeuvre un procédé selon les revendications 1 à 10.

**FIG 1**

```
FIG 2    wort(W) --> silbe(t(W,B)), silben(t(B,[])).
         wort(W) --> silbe(t(W,[])).

         silben(t(A,B)) --> silbe_2(t(A,C)), silben(t(C,B)).
         silben(t(A,B)) --> silbe_2(t(A,B)).

         silbe(t(A,B)) --> anlaut(t(A,C)), silbe_2(t(C,B)).
         silbe(t(A,B)) --> silbe_2(t(A,B)).

         silbe_2(t(A,B)) --> ( vokal_1(t(A,D)),
                             ( auslaut_1(t(D,B))
                             ; auslaut_2(t(D,B))
                             )
                           ; vokal_2(t(A,D)), auslaut_2(t(D,B))
                           ).
         silbe_2(t(A,B)) --> vokal(t(A,B)).

         vokal(T) --> vokal_1(T).
         vokal(T) --> vokal_2(T).

         vokal_1(t([a|A],A)) --> [a].
         vokal_1(t([ae|A],A)) --> [ae].
         ...
         vokal_1(t([uh|A],A)) --> [uh].

         vokal_2(t([ai|A],A)) --> [ai].
         ...
         vokal_2(t([au|A],A)) --> [au].

         anlaut(t([b|A],A)) --> [b].
         anlaut(t([d|A],A)) --> [d].
         ...
         anlaut(t([z|A],A)) --> [z].

         anlaut(t([b,l|A],A)) --> [bl].
         anlaut(t([b,r|A],A)) --> [br].
         ...
         anlaut(t([t,s|A],A)) --> [ts].

         anlaut(t([sh,p,l|A],A)) --> [shpl].
         anlaut(t([sh,p,r|A],A)) --> [shpr].
         anlaut(t([sh,t,r|A],A)) --> [shtr].

         auslaut_1(t([l,t,s|A],A)) --> [lts].
         ...
         auslaut_1(t([x|A],A)) --> [x].
         ...
         auslaut_2(t([r,l,t|A],A)) --> [rlt].
         auslaut_2(t([r,m,t|A],A)) --> [rmt].
         ...
         auslaut_2(t([r,n|A],A)) --> [rn].
         auslaut_2(t([r,t,s|A],A)) --> [rts].
         auslaut_2(t([ng|A],A)) --> [ng].
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6256630 B1
- US 5873056 A
- EP 1162602 A
- US 5638425 A
- US 5724593 A